# EUROPÄISCHE PATENTSCHRIFT

(11) **EP 1 895 792 B1**
(45) Veröffentlichungstag und Bekanntmachung des Hinweises auf die Patenterteilung: **20.03.2019**
(21) Anmeldenummer: 07016510.5
(22) Anmeldetag: 23.08.2007
(51) Int. Cl.: H04W 8/18, H04W 8/20, H04W 84/02

(54) **Verfahren und Vorrichtungen für die Aktualisierung der Konfiguration eines Mobilfunkteilnehmer-Identifikations-Moduls**
Methods and apparatus for configuration updating of a cellular phone subscriber identification module
Procédés et dispositifs pour l'actualisation de la configuration d'un module d'identification d'abonné au service radiophonique mobile

(30) Priorität: 28.08.2006 DE 102006040087
(43) Veröffentlichungstag der Anmeldung: 05.03.2008
(73) Patentinhaber: Vodafone Holding GmbH, 40213 Düsseldorf (DE)
(72) Erfinder: Trapp, Harald, 42489 Wülfrath (DE)
(74) Vertreter: Weisbrodt, Bernd

(56) Entgegenhaltungen:
- EP-A1- 0 562 890
- WO-A2-2005/053348
- US-A1- 2004 166 839

## Beschreibung

Die vorliegende Erfindung betrifft Verfahren zur Aktualisierung der Konfiguration eines einem in einem Mobilfunknetz betreibbaren mobilen Endgerät einen einen Mobilfunkteilnehmer im Mobilfunknetz authentifizierenden Zugang zum Mobilfunknetz ermöglichenden Mobilfunkteilnehmer-Identifikations-Moduls hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes.

Femer betrifft die vorliegende Erfindung ein Mobilfunknetz mit einer aus Funkzellen aufgebauten zellularen Netzstruktur und darin betreibbaren mobilen Endgeräten, vorzugsweise gemäß dem GSM- und/oder UMTS-Funknetzstandard, bei dem die das Mobilfunknetz ausbildenden Einrichtungen und/oder die von diesen genutzten Einrichtungen zur Ausführung eines erfindungsgemäßen Verfahrens ausgebildet sind.

Gegenstand der vorliegenden Erfindung sind ferner ein mobiles Endgerät zum Betrieb in einem Mobilfunknetz, insbesondere Mobilfunktelefon, und ein Mobilfunkteilnehmer-Identifikations-Modul zur Nutzung in einem in einem Mobilfunknetz betreibbaren mobilen Endgerät, vorzugsweise gemäß dem GSM- und/oder UMTS-Funknetzstandard, welche zur Ausführung eines erfindungsgemäßen Verfahrens ausgebildet sind.

Zur Aktualisierung der Konfiguration eines einem in einem Mobilfunknetz betreibbaren mobilen Endgerät einen einen Mobilfunkteilnehmer im Mobilfunknetz authentifizierenden Zugang zum Mobilfunknetz ermöglichenden Mobilfunkteilnehmer-Identifikations-Moduls, in der Regel einer sogenannten SIM-Karte (SIM: Subscriber Identity Module), hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes, wie insbesondere Abrechnungsinformationen für Roaming, Diensteprofilen in Abhängigkeit von für den Mobilfunkteilnehmer im Mobilfunknetz eingerichteten Vorzugsgebieten und/oder dergleichen Betriebsparametem, ist es bisher üblicherweise erforderlich, dass ein entsprechender Aktualisierungsbedarf des Mobilfunkteilnehmer-Identifikations-Moduls seitens des Mobilfunknetzes festgestellt wird. In der Regel erfolgt die Aktualisierung beziehungsweise die zur Übertragung entsprechender Aktualisierungsinformationen an das Mobilfunkteilnehmer-Identifikations-Moduls beziehungsweise das das Mobilfunkteilnehmer-Identifikations-Moduls nutzende, im Mobilfunknetz betreibbare mobile Endgerät unter Nutzung eines seitens des Mobilfunknetzes vorgesehenen Recheneinrichtung, üblicherweise einem sogenannten OTA-Server über die Luftschnittstelle des Mobilfunknetzes (OTA: Over The Air). Der OTA-Server des Mobilfunknetzes provisioniert dabei durch Bereitstellung der entsprechenden Aktualisierungsinformationen das Mobilfunkteilnehmer-Identifikationsmodul.

Nachteilig bei der bisher üblichen Aktualisierung ist, dass Ressourcen der Luftschnittstelle des Mobilfunknetzes belastet werden, da, insbesondere bei einer zumindest halbautomatischen Aktualisierung, mitunter der Versuch einer Aktualisierung von Mobilfunkteilnehmer-Identifikationsmodulen erfolgt, obwohl diese nicht Aktualisierungsbedürftig sind und/oder die Nutzer der entsprechenden Mobilfunkteilnehmer-Identifikationsmodule eine Aktualisierung nicht wünschen beziehungsweise benötigen.

Der Erfindung liegt in Anbetracht dieses Standes der Technik die Aufgabe zugrunde, auf einfache und kostengünstige Art und Weise und insbesondere ohne dass Ressourcen der Luftschnittstelle des Mobilfunknetzes unnötig belastet werden, eine Aktualisierung der Konfiguration eines einem in einem Mobilfunknetz betreibbaren mobilen Endgerät einen einen Mobilfunkteilnehmer im Mobilfunknetz authentifizierenden Zugang zum Mobilfunknetz ermöglichenden Mobilfunkteilnehmer-Identifikations-Moduls hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes zu ermöglichen.

Zur technischen Lösung wird mit der vorliegenden Erfindung ein Verfahren zur Aktualisierung der Konfiguration eines einem in einem Mobilfunknetz betreibbaren mobilen Endgerät einen einen Mobilfunkteilnehmer im Mobilfunknetz authentifizierenden Zugang zum Mobilfunknetz ermöglichenden Mobilfunkteilnehmer-Identifikations-Moduls hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes vorgeschlagen, wobei seitens des Mobilfunkteilnehmer-Identifikations-Moduls wenigstens eine Kennung vorgesehen ist, welche zumindest mobilfunknetzseitig eine Erfassung eines Aktualisierungsbedürfnisses des Mobilfunkteilnehmer-Identifikations-Moduls ermöglicht, und auf dem Mobilfunkteilnehmer-Identifikations-Modul und/oder seitens des das Mobilfunkteilnehmer-Identifikations-Modul nutzenden mobilen Endgerätes die folgenden Schritte ausgeführt werden:
- Erfassung der Kennung des Mobilfunkteilnehmer-Identifikations-Moduls,
- Senden einer die Kennung enthaltenden Nachricht an einen Netzknoten des Mobilfunknetzes,
- Empfangen einer seitens des Mobilfunknetzes auf die Nachricht erzeugten Antwortnachricht von einem Netzknoten des Mobilfunknetzes zumindest bei Aktualisierungsbedarf hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes,
- Extrahieren wenigstens einer Aktualisierungsinformation aus der empfangenen Antwortnachricht bei Aktualisierungsbedarf hinsichtlich der Nutzung von dem Mobilfunkteilnehmer und/oder dem von diesem genutzten mobilen Endgerät im Mobitfunknetz zur Verfügung stehenden Diensten und/oder Funktionalitäten des Mobilfunknetzes und
- Speicherung der Aktualisierungsinformation auf dem Mobilfunkteilnehmer-Identifikations-Modul,
dadurch gekennzeichnet, dass die Kennung neben der Erkennung eines Aktualisierungsbedürfnisses eine zumindest mobilfunknetzseitig unterscheidbare Identifizierung von ansonsten identischen Mobilfunkteilnehmer-Identifikations-Modulen ermöglicht, durch die eine Individualisierung von Mobilfunkteilnehmer-Identifikations-Modulen eines Sets von Mobilfunkteilnehmer-Identifikations-Modulen, insbesondere sogenannten Twin-, Tri- oder Multi-SIM-Sets, erzielbar ist.

Der Erfindung liegt die Erkenntnis zugrunde, dass durch Versehen der Mobilfunkteilnehmer-Identifikations-Module mit wenigstens einer eine Erfassung eines Aktualisierungsbedürfnisses des Mobilfunkteilnehmer-Identifikations-Moduls ermöglichenden Kennung auf einfache und kostengünstige Art und Weise eine Aktualisierung der Konfiguration eines einem in einem Mobilfunknetz betreibbaren mobilen Endgerät: einen einen Mobilfunkteilnehmer im Mobilfunknetz authentifizierenden Zugang zum Mobilfunknetz ermöglichenden Mobilfunkteilnehmer-Identifikations-Moduls hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes realisierbar ist. Dabei werden insbesondere aufgrund der bei der erfindungsgemäßen Verfahrensweise erfolgenden Berücksichtigung eines Aktualifeierungsbedarfs hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes Ressourcen der Luftschnittstelle des Mobilfunknetzes nur Bedarfsweise genutzt und entsprechend belastet.

Eine vorteilhafte Ausgestaltung der Erfindung ist gekennzeichnet durch ein Extrahieren einer zumindest mobilfunknetzseitig eine Erfassung eines Aktualisierungsbedürfnisses und/oder standes des Mobilfunkteilnehmer-Identifikations-Moduls ermöglichenden Kennung aus der empfangenen Antwortnachricht und ein Speichern der extrahierten Kennung seitens des Mobilfunkteilnehmer-Identifikations-Moduls. Die erfindungsgemäß seitens des Mobilfunkteilnehmer-Identifikations-Moduls extrahierbare und speicherbare Kennung muss dabei vorteilhafterweise lediglich seitens des Mobilfunknetzes eine Erfassung eines Aktualisierungsbedürfnisses und/oder -standes des Mobilfunkteilnehmer-Identifikations-Moduls ermöglichen.

Vorteilhafterweise erfolgt die Erfassung der Kennung eines Mobilfunkteilnehmer-Identifikations-Moduls, durch Lesen einer die Kennung als Inhalt aufweisenden Speicherstelle des Mobilfunkteilnehmer-Identifikations-Moduls.

In einer weiteren vorteilhaften Ausgestaltung der Erfindung wird das Senden der Kennung an den Netzknoten des Mobilfunknetzes initiiert. Die Initiierung erfolgt durch eine seitens des mobilen Endgerätes und/oder eine seitens des Mobilfunkteilnehmer-Identifikations-Moduls ausführbare Anwendung des Mobilfunkteilnehmer-Identifikations-Moduls. Eine weitere Ausgestaltung der Erfindung sieht vor, dass das Senden der Kennung an den Netzknoten des Mobilfunknetzes seitens des Endgerätes und/oder seitens des Mobilfunkteilnehmer-Identifikations-Moduls beim Einschalten des mobilen Endgerätes oder beim Anmelden des mobilen Endgerätes beim beziehungsweise in dem Mobilfunknetz automatisch initiiert wird, oder manuell durch wenigstens eine Betätigungseingabe, beispielsweise seitens einer Eingabeeinrichtung des mobilen Endgerätes. Eine entsprechende Betätigungseingabe kann dabei zum Beispiel durch Betätigung von Tasten seitens des mobilen Endgerätes und/oder durch Spracheingabe seitens des mobilen Endgerätes erfolgen. Die so erfindungsgemäß endgeräteseitig erfolgende Initiierung der Übertragung der Kennung ermöglicht vorteilhafterweise eine den individuellen Bedürfnissen des Mobilfunkteilnehmers gerecht werdende Aktualisierung des Mobilfunkteilnehmer-Identifikations-Moduls.

Eine weitere Ausgestaltung der Erfindung sieht eine Ausführung der Verfahrensschritte mittels eines seitens des mobilen Endgerätes und/oder eines seitens des Mobilfunkteilnehmer-Identifikations-Moduls ausführbaren Anwendungsprogramms vor. Ein besonders bevorzugtes Beispiel der Erfindung sieht dabei vor, dass das Mobilfumkteilnehmer-Identifikations-Modul als eine ein sogenanntes Applet ausführende SIM-Karte ausgebildet ist.

Vorteilhafterweise werden die erfindungsgemäßen Nachrichten - also die die Kennung enthaltende, an einen Netzknoten des Mobilfunknetzes zu sendende Nachricht und die seitens des Mobilfiunknetzes daraufhin erzeugte Antwortnachricht - mittels einer Nachricht eines Nachrichtendienstes des Mobilfunknetzes übertragen, vorzugsweise mittels SMS, MMS, GPRS oder dergleichen Dienste zum Austausch von Daten eines Mobilfunknetzes.

Ein weiteres Beispiel der Erfindung sieht vor, dass dem Mobilfunkteilnehmer im Mobilfunknetz wenigstens zwei oder mehr Mobilfunkteilnehmer-Identifikations-Module mit identischen Inhalten zugeordnet sind, von denen während deckungsgleicher Zeiteinheiten nur eine einen Zugang zum Mobilfunknetz erhält, und die wenigstens eine jeweils seitens eines Mobilfunkteilnehmer-Identifikations-Mpduls vorgesehene Kennung zumindest mobilfunknetzseitig eine unterscheidbare Identifizierung der jeweiligen Mobilfunkteilnehmer-Identifikations-Module ermöglicht. Eine vorteilhafte erfindungsgemäße Verfahrensführung ist gekennzeichnet durch ein Extrahieren einer zumindest mobilfunknetzseitig eine unterscheidbare Identifizierung des jeweiligen Mobilfunkteilnehmer-Identifikations-Moduls ermöglichenden Kennung aus der empfangenen Antwortnachricht und ein Speichern der extrahierten Kennung seitens des Mobilfunkteilnehmer-Identifikations-Moduls. Erfindungsgemäß wird so eine Aktualisierung der Konfiguration von Mobilfunkteilnehmer-Identifikations-Modulen eines im Stand der Technik als sogenanntes Twin-, Tri- oder Multi-SIM-Set bekannten SIM-Sets ermöglicht.

Entsprechende, einem in einem Mobilfunknetz betreibbaren mobilen Endgerät einen einen Mobilfunkteilnehmer im Mobilfunknetz authentifizierenden Zugang zum Mobilfunknetz ermöglichende Mobilfunkiteilnehmer-Identifikations-Module in Form sogenannter SIM-Karten, wobei einem Mobilfunkteilnehmer im Mobilfunknetz wenigstens zwei oder mehr kartenförmige Mobilfunkteilnehmer-Identifikations-Module (SIM-Karten) mit identischen Inhalten zugeordnet sind, von denen während deckungsgleicher Zeiteinheiten nur eine einen Zugang zum Mobilfunknetz erhält, sind beispielsweise als sogenannte Twin- oder Tri-SIM-Sets aus der EP 0 669 774 B1 bekannt. Die einzelnen Mobilfunkteilnehmer-Identifikations-Module (SIM-Karten) sind bei entsprechenden Twin- oder Tri-SIM-Sets mobilfunknetzseitig aufgrund ihrer identischen Inhalte - auch geklonte Struktur genannt - nicht voneinander zu unterscheiden. Dies führt mitunter dazu, dass mobilfunknetzseitig nicht eindeutig erfasst werden kann, ob das jeweils von dem Mobilfunkteilnehmer genutzte kartenförmige Mobilfunkteilnehmer-Identifikations-Modul (SIM-Karte) den dem Mobilfunkteilnehmer und/oder dem von diesem genutzten mobilen Endgerät im Mobilfunknetz zur Verfügung stehenden Diensten und/oder Funktionalitäten des Mobilfunknetzes genügt beziehungsweise auf dem neusten Stand des Mobilfunknetzes ist. Dementsprechend sind mobilfunknetzseitig gegebene Aktualisierungen, insbesondere hinsichtlich der dem Mobilfunkteilnehmer im Mobilfunknetz zur Verfügung stehenden Diensten und/oder Funktionalitäten des Mobilfunknetzes, wie Abrechnungsinformationen für Roaming, Diensteprofilen in Abhängigkeit von für den Mobilfunkteilnehmer im Mobilfunknetz eingerichteten Vorzugsgebieten und/oder dergleichen Betriebsparametern, nicht feststellbar. Dies ist oftmals unbefriedigend für die Mobilfunkteilnehmer und führt dazu, dass diese von einer Nutzung entsprechender SIM-Sets absehen.

Ferner offenbart das Dokument US 2004/0166839 A1 ein Verfahren zur Aktualisierung der Konfiguration eines Mobiltelefons, nachdem eine SIM-Karte gewechselt worden ist.

Dadurch, dass die erfindungsgemäße Kennung neben der Erkennung eines Aktualisierungsbedürfnisses auch noch eine zumindest mobilfunknetzseitig unterscheidbare Identifizierung von ansonsten identischen Mobilfunkteilnehmer-Identifikations-Modulen ermöglicht, ist auf einfache und kostengünstige Art und Weise eine Individualisierung von Mobilfunkteilnehmer-Identifikations-Modulen eines entsprechenden Sets erzielbar.

Zur technischen Lösung wird mit der vortiegenden Erfindung ferner ein Verfahren zur Aktualisierung der Konfiguration eines einem in einem Mobilfunknetz betreibbaren mobilen Endgerät einen einen Mobilfunkteilnehmer im Mobilfunknetz authentifizierenden Zugang zum Mobilfunknetz ermöglichenden Mobilfunkteilnehmer-Identifikations-Moduls hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes vorgeschlagen, wobei seitens des Mobilfunkteilnehmer-Identifikations-Moduls wenigstens eine Kennung vorgesehen ist, welche zumindest mobilfunknetzseitig eine Erfassung eines Aktualisierungsbedürfnisses des Mobilfunkteilnehmer-Identifikations-Moduls ermöglicht, und seitens eines Netzknotens des Mobilfunknetzes und/oder seitens des Mobilfunknetzes die folgenden Schritte ausgeführt werden:
- Empfangen einer die Kennung enthaltenden Nachricht von einem im Mobilfunknetz betreibbaren mobilen Endgerät,
- Extrahieren der Kennung aus der empfangenen Nachricht,
- Ermittlung eines Aktualisierungsbedarfs hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes anhand und/oder aus der extrahierten Kennung,
- Erzeugen einer wenigstens eine Aktualisierungsinformation aufweisenden Antwortnachricht in Abhängigkeit des ermittelten Aktualisierungsbedarfs hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes, und
- Senden der Antwortnachricht über das mobile Endgerät an das Mobilfunkteilnehmer-Identifikations-Modul,
dadurch gekennzeichnet, dass die Kennung neben der Erkennung eines Aktualisierungsbedürfnisses eine zumindest mobilfunknetzseitig unterscheidbare Identifizierung von ansonsten identischen Mobilfunkteilnehmer-Identifikations-Modulen ermöglicht, durch die eine Individualisierung von Mobilfunkteilnehnier-Identifikations-Modulen eines Sets von Mobilfunkteilnehmer-Identifikations-Modulen, insbesondere sogenannten Twin-, Tri- oder Multi-SIM-Sets, erzielbar ist.

Vorteilhafterweise enthält die Antwortnachricht eine zumindest mobilfunknetzseitig eine Erfassung eines Aktualisierungsbedürfnisses und/oder -standes des Mobilfunkteilnehmer-Identifikations-Moduls ermöglichende Kennung.

Ein weiteres vorteilhaftes Biespiel der Erfindung sieht vor, dass dem Mobilfunkteilnehmer im Mobilfunknetz wenigstens zwei oder mehr Mobilfunkteilnehmer-Identifikations-Module mit identischen Inhalten zugeordnet sind, von denen während deckungsgleicher Zeiteinheiten nur eine einen Zugang zum Mobilfunknetz erhält, und die wenigstens eine jeweils seitens eines Mobilfunkteilnehmer-Identifikations-Mpduls vorgesehene Kennung zumindest mobilfunknetzseitig eine unterscheidbare Identifizierung der jeweiligen Mobilfunkteilnehmer-Identifikatidns-Module ermöglicht. Das erfindungsgemäße Verfahren ist vorteilhaftenweise gekennzeichnet durch ein Extrahieren wenigstens einer zumindest mobilfunknetzseitig eine unterscheidbare Identifizierung des jeweiligen Mobilfunkteilnehmer-Identifikations-Moduls ermöglichenden Kennung aus der empfangenen Nachricht, Erzeugen einer aktualisierten Kennung und Einfügen der aktualisierten Kennung in die Antwortnachricht. Dadurch, dass die erfindungsgemäße Kennung neben der Erkennung eines Aktualisierungsbedürfnisses auch noch eine zumindest mobilfunknetzseitig unterscheidbare Identifizierung von ansonsten identischen Mobilfunkteilnehmer-Identifikations-Modulen ermöglicht, ist auf einfache und kostengünstige Art und Weise eine Individualisierung von Mobilfunkteilnehmer-Identifikations-Modulen eines Sets von Mobilfunkteilnehmer-Identifikations-Modulen, insbesondere sogenannten Twin-, Tri- oder Multi-SIM-Sets, erzielbar.

Eine weitere vorteilhafte Ausgestaltung der Erfindung ist gekennzeichnet durch eine Ausführung der erfindungsgemäßen Verfahrensschritte mittels eines auf einer Recheneinrichtung des Mobilfunknetzes, beispiels weise eines sogenannten OTA-Servers unter Nutzung von OTA-Diensten (OTA: Over The Air), des Mobilfunknetzes, ausführbaren Anwendungsprogramms.

Gemäß einer weiteren vorteilhaften Ausgestaltung der Erfindung werden die Kennungen der dem Mobilfunkteilnehmer zugeordneten Mobilfunkteilnehmer-Identifikations-Module in wenigstens einer mobilfunknetzseitigen Datenbank erfasst und verwaltet.

Gemäß einer weiteren vorteilhaften Führung des erfindungsgemäßen Verfahrens wird die von dem mobilen Endgerät an das Mobilfunknetz übertragene Kennung mobilfunknetzseitig wenigstens einem Vergleich mit wenigstens einer der in der mobilfunknetzseitigen Datenbank erfassten und verwalteten Kennungen unterzogen.

Gegenstand der Erfindung ist ferner ein Mobilfunknetz mit einer aus Funkzellen aufgebauten zellularen Netzstruktur und darin betreibbaren mobilen Endgeräten , insbesondere gemäß dem GSM- und/oder UMTS-Funknetzstandard, dadurch gekennzeichnet, dass die das Mobilfunknetz ausbildenden Einrichtungen und/oder die von diesen genutzten Einrichtungen zur Ausführung eines erfindungsgemäßen Verfahrens ausgebildet sind.

Ein weiteres vorteilhaftes Beispiel der Erfindung sieht eine Recheneinrichtung eines Mobilfunknetzes, vorzugsweise Provisionierungs-Server eines Mobilfunknetzes, vor, die ausgebildet ist, anhand der Kennung einen Aktualisierungsstand und/oder -bedarf von Mobilfunkteilnehmer-Identifikations-Modulen zu erkennen.

Ein besonders vorteilhaftes Beispiel der Erfindung sieht vor, dass Mobilfunkteilnehmer-Identifikations-Module Verwendung finden, bei denen die einen Aktualisierungsstand und/oder -bedarf signalisierende Kennung durch setzen oder nicht setzten eines Bits seitens einer Speicherstelle des Mobilfunkteilnehmer-Identifikations-Moduls konfigurierbar ist. Dabei kommen vorteilhafterweise in ihrem Auslieferungszustand bereits eine gesetzte Kennung aufweisende als auch in ihrem Auslieferungszustand keine gesetzte Kennung aufweisende Mobilfunkteilnehmer-Identifikations-Module zum Einsatz. Das erstmalige setzen der Kennung als auch das nach einer erfolgten Aktualisierung des Mobilfunkteilnehmer-Identifikations-Moduls erfolgende setzen der Kennung wird vorteilhafterweise mittels eines OTA-Servers oder dergleichen Einrichtung durchgeführt. Gemäß einem besonders vorteilhaften Vorschlag der Erfindung erfolgt das Setzen der Kennung dabei unter Berücksichtigung eines zeitlichen Vorlaufs beziehungsweise einer Vorfrist. Eine besonders bevorzugte Anwendung der Erfindung ist dabei im Bereich von Speditionsunternehmen und dergleichen Unternehmen gegeben, wo die erfindungsgemäße Nutzung einer den Aktualisierungsstand und/oder -bedarf signalisierenden Kennung vorteilhafterweise Berücksichtigung in der Planungssteuerung von Einsätzen beziehungsweise der in oder mit diesen einzusetzenden mobilen Endgeräten beziehungsweise von diesen entsprechend genutzten Mobilfunkteilnehmer-Identifikations-Modulen findet. So kann der Vorlauf beziehungsweise die Vorfrist der Kennungssetzung vorteilhafterweise in Kombination dazu genutzt werden, den Nutzer von entsprechenden mobilen Endgeräten beziehungsweise von diesen entsprechend genutzten Mobilfunkteilnehmer-Identifikations-Modulen daran erinnern im Mobilfunknetz zur Verfügung stehende Diensten und/oder Funktionalitäten des Mobilfunknetzes rechtzeitig zu aktivieren beziehungsweise frei zu schalten. Bei sogenannten Prepaid-Funktionalitäten können so vorteilhafterweise mit der Erinnerung beispielsweise SMS-Versendungen zum Kauf angeboten werden. Darüber hinaus sind vorteilhafterweise weitere zur Planungssteuerung dienende beziehungsweise nutzbare Anwendungen mit der erfindungsgemäßen Konfigurationsaktualisierung realisierbar.

Gegenstand der vorliegenden Erfindung ist zur verfahrensgemäßen Anwendung ferner ein mobiles Endgerät insbesondere Mobilfunktelefon, zum Betrieb in einem Mobilfunknetz, insbesondere gemäß dem GSM- und/oder UMTS-Funknetzstandard, umfassend eine Einheit zur Erfassung einer eine zumindest mobilfunknetzseitig eine Erfassung eines Aktualisierungsbedürfnisses eines Mobilfunkteilnehmer-Identifikations-Moduls hinsichtlich der Nutzung von dem Mobilfunkteilnehmer und/oder dem von diesem genutzten mobilen Endgerät im Mobilfunknetz zur Verfügung stehenden Diensten und/oder Funktionalitäten des Mobilfunknetzes ermöglichenden Kennung seitens eines Mobilfunkteilnehmer-Identifikations-Moduls, eine Einheit zur Bestimmung des Aktualisierungsbedürfnisses anhand der erfassten Kennung des Mobilfunkteilnehmer-Identifikations-Moduls, eine Einheit zum Senden einer Nachricht an einen Netzknoten des Mobilfunknetzes, eine Einheit zum Empfangen einer seitens des Mobilfunknetzes auf die Nachricht erzeugten
Antwortnachricht von einem Netzknoten des Mobilfunknetzes, eine Einheit zum Extrahieren
wenigstens einer Aktualisierungsinformation und/oder einer Kennung aus der empfangenen Antwortnachricht, und durch eine Einheit zur Speicherung der extrahierten Aktualisierungsinformation und/oder Kennung auf dem Mobilfunkteilnehmer-Identifikations-Modul , dadurch gekennzeichnet, dass die Kennung neben der Erkennung eines Aktualisierungsbedürfnisses eine zumindest mobilfunknetzseitig unterscheidbare Identifizierung von ansonsten identischen Mobilfunkteilnehmer-Identifikations-Modulen ermöglicht, durch die eine Individualisierung von Mobilfunkteilnehmer-Identifikations-Modulen eines Sets von Mobilfunkteilnehmer-Identifikations-Modulen, insbesondere sogenannten Twin-, Tri- oder Multi-SIM-Sets, erzielbar ist.

Gegenstand der vorliegenden Erfindung ist zur verfahrensgemäßen Anwendung ferner ein Mobilfunkteilnehmer-Identifikations-Modul zur Nutzung in einem in einem Mobilfunknetz betreibbaren mobilen Endgerät, insbesondere gemäß dem GSM- und/oder UMTS-Funknetzstandard, umfassend Mittel zum Speichern einer Kennung seitens einer Speicherstelle des Mobilfunkteilnehmer-Identifikations-Moduls, wobei die Kennung zumindest mobilfunknetzseitig eine Erfassung eines Aktualisierungsbedürfnisses eines Mobilfunkteilnehmer-Identifikations-Moduls (SIM) hinsichtlich der Nutzung von dem Mobilfunkteilnehmer und/oder dem von diesem genutzten mobilen Endgerät (Mobile) im Mobilfunknetz zur Verfügung stehenden Diensten und/oder Funktionalitäten des Mobilfunknetzes ermöglicht, Mittel zum Lesen der Kennung aus der Speicherstelle des Mobilfunkteilnehmer-Identifikations-Moduls, Mittel zum Initiieren der Sendung einer die Kennung umfassenden Nachricht, Mittel zum Empfang einer Antwortnachricht auf die Nachricht, Mittel zum Extrahieren wenigstens einer Aktualisierungsinformation und/oder einer Kennung aus der empfangenen Antwortnachricht, und Mittel zum Speichern der Aktualisierungsinformation und/oder der aus der Antwortnachricht extrahierten Kennung auf dem Mobilfunkteilnehmer-ldentifikations-Modul, dadurch gekennzeichnet, dass die Kennung neben der Erkennung eines Aktualisierungsbedürfnisses eine zumindest mobilfunknetzseitig unterscheidbare Identifizierung von ansonsten identischen Mobilfunkteilnehmer-Identifikations-Modulen ermöglicht, durch die eine Individualisierung von Mobilfunkteilnehmer-Identifikations-Modulen eines Sets von Mobilfunkteilnehmer-ldentifikätions-Modulen, insbesondere sogenannten Twin-, Tri- oder Multi-SIM-Sets, erzielbar ist.

Die Erfindung wird gemäß den beigefügten Ansprüchen ausgeführt.

Die Ausführungsbeispiele in der folgenden Beschreibung, die nicht in den beigefügten Ansprüchen enthalten sind, werden nicht als Teil der Erfindung aufgefasst.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Darstellung ein Ablaufdiagramm eines ersten Ausführungsbeispiels einer erfindungsgemäßen Aktualisierung der Konfiguration eines Mobilfunkteilnehmer-Identifikations-Moduls und
- Fig. 2: in einer schematischen Darstellung ein Ablaufdiagramm eines zweiten Ausführungsbeispiels einer erfindungsgemäßen Aktualisierung der Konfiguration eines Mobilfunkteilnehmer-Identifikations-Moduls.

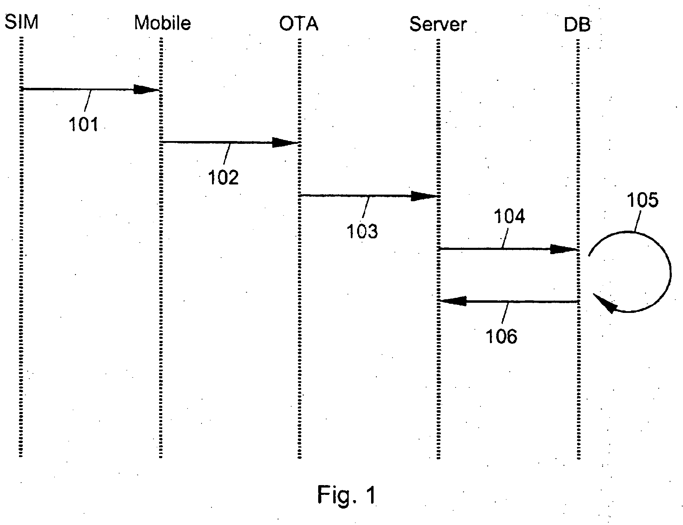

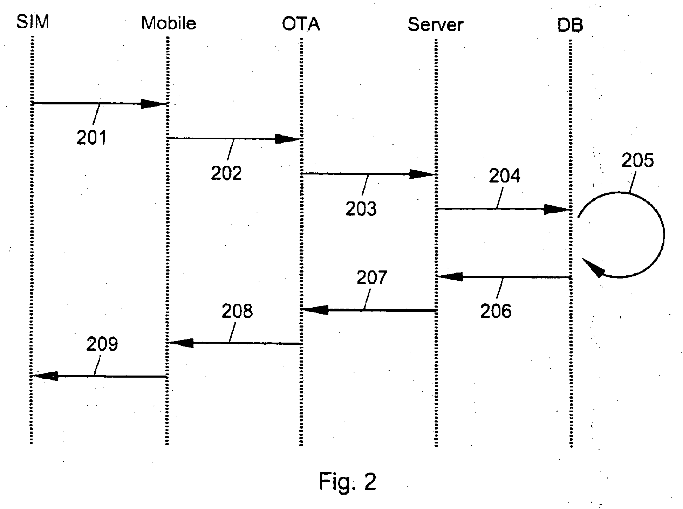

Bei den in Fig. 1 und Fig. 2 dargestellten Ablaufdiagrammen von Ausführungsbeispielen der Erfindung ist einem Mobilfunkteilnehmer im Mobilfunknetz ein Mobilfunkteilnehmer-Identifikations-Modul (SIM) - vorliegend in Form einer SIM-Karte (SIM) - zugeordnet, welches dem Mobilfunkteilnehmer mit einem in einem Mobilfunknetz betreibbaren mobilen Endgerät (Mobile) - vorliegend in Form eines in einem Mobilfunknetz gemäß dem GSM- und/oder UMTS-Funknetzstandard betreibbaren Mobilfunktelefons (Mobile) - einen den Mobilfunkteilnehmer im Mobilfunknetz authentifizierenden Zugang zum Mobilfunknetz ermöglicht.

Das Ablaufdiagramm gemäß Fig. 1 zeigt einen ersten Anwendungsfall einer Aktualisierung beziehungsweise Provisionierung der Konfiguration eines Mobilfunkteilnehmer-ldentifikations-Moduls (SIM) hinsichtlich der einem mobilen Endgerät (Mobile) im Mobilfunknetz zur Verfügung stehenden Diensten und/oder Funktionalitäten des Mobilfunknetzes. Im Mobilfunknetz zur Verfügung stehende Dienste und/oder Funktionalitäten des Mobilfunknetzes sind dabei insbesondere hinsichtlich Änderungen von Abrechnungsinformationen für ein sogenanntes Roaming, eine Änderung von sogenannten Diensteprofilen in Abhängigkeit von für den Mobilfunkteilnehmer im Mobilfunknetz eingerichteten Vorzugsgebieten, beispielsweise in Abhängigkeit von geographischen Orten hinsichtlich unterschiedlicher Tarifoptionen, oder dergleichen Diensten und/oder Funktionalitäten eines Mobilfunknetzes gegeben.

Initiiert von dem mobilen Endgerät (Mobile) und/oder dem von diesem genutzen Mobilfunkteilnehmer-Identifikations-Moduls (SIM) wird seitens des Mobilfunkteilnehmer-Identifikations-Moduls (SIM) vorliegend automatisch beim Einschalten des das Mobilfunkteilnehmer-Identifikations-Modul (SIM) nutzenden mobilen Endgerätes (Mobile) und/oder auf Anforderung des Nutzers des mobilen Endgerätes (Mobile) ein seitens des Mobilfunkteilnehmer-Identifikations-Moduls (SIM) ausführbares Anwendungsprogramm, vorliegend ein sogenanntes Applet, ausgeführt. Dabei wird in dem mit 101 gekennzeichneten Verfahrensschritt von dem Applet eine seitens einer Speicherstelle des Mobilfunkteilnehmer-Identifikations-Moduls (SIM) gespeicherte Kennung, welche zumindest mobilfunknetzseitig eine Erfassung eines Aktualisierungsbedürfnisses des Mobilfunkteilnehmer-Ideritifikations-Moduls (SIM) ermöglicht, ausgelesen.

Die so aus der Speicherstelle des Mobilfunkteilnehmer-Identifikations-Moduls (SIM) ausgelesene Kennung wird von dem mobilen Endgerät (Mobile) initiiert durch das Anwendungsprogramm (Applet) in dem mit 102 gekennzeichneten Verfahrensschritt über einen Nachrichtendienst des Mobilfunknetzes, vorliegend mittels einer SMS (SMS: Short Message Service), an einen zur Aktualisierung und/oder Provisionierung von Mobilfunkteilnehmer-Identiftkations-Modulen (SIM) im Mobilfunknetz eingerichteten Dienst (OTA: Over The Air) an den Aktualisierungs- beziehungsweise Provisionierungsdienst (OTA) des Mobilfunknetzes übertragen.

Der Aktualisierungs- beziehungsweise Provisionierungsdienst übermittelt die entsprechende Kennung in dem mit 103 gekennzeichneten Verfahrensschritt an eine die Aktualisierung beziehungsweise Provisionierung überprüfende Recheneinrichtung (Server), vorliegend einem OTA-Server. Die Recheneinrichtung (Server) ist mit einer Datenbank (DB), welche Informationen über den Aktualisierungsstand des dem Mobilfunkteilnehmer zugeordneten Mobilfunkteilnehmer-Identifikations-Moduls (SIM) aufweist, verbunden beziehungsweise weist diese Datenbank (DB) auf.

In dem Verfahrensschritt 104 fragt die Recheneinrichtung (Server) unter Nutzung der Kennung in der Datenbank (DB) entsprechende Aktualisierungsinformationen zu dem Mobilfunkteilnehmer-Identifikations-Modul (SIM) ab. Im Rahmen der Datenbankabfrage wird in dem Verfahrensschritt 105 überprüft, ob das entsprechende Mobilfunkteilnehmer-Identifikations-Modul (SIM) aktualisierungsbedürftig ist oder nicht. Bei dem in Fig. 1 dargestellten Anwendungsfall ist das entsprechende Mobilfunkteilnehmer-Identifikations-Modul (SIM) bereits aktualisiert, also nicht aktualisierungsbedürftig. Dementsprechend wird eine entsprechende Mitteilung als Ergebnis in dem mit 106 gekennzeichneten Verfahrensschritt seitens der Recheneinrichtung (Server) ermittelt. Eine entsprechende Aktualisierung des Mobilfunkteilnehmer-Identifikations-Moduls (SIM) ist dementsprechend nicht weiter erforderlich, wie anhand der mobilfunknetzseitigen Abfrage unter Nutzung der Kennung des Mobilfunkteilnehmer-Identifikations-Moduls (SIM) ermittelt wurde.

Das Ablaufdiagramm gemäß Fig. 2 zeigt einen zweiten Anwendungsfall einer Aktualisierung beziehungsweise Provisionierung der Konfiguration eines Mobilfunkteilnehmer-Identifikations-Moduls (SIM) hinsichtlich der einem mobilen Endgerät (Mobile) im Mobilfunknetz zur Verfügung stehenden Diensten und/oder Funktionalitäten des Mobilfunknetzes.

Im Rahmen der Ausführung des Anwendungsprogramms (Applet) auf dem Mobilfunkteilnehmer-Identifikations-Modul (SIM) (Verfahrensschritt 201) wird die seitens der Speicherstelle des Mobilfunkteilnehmer-Identifikations-Modul (SIM) erfasste Kennung, welche zumindest mobitfunknetzseitig eine Erfassung eines Aktualisierungsbedürfnisses des Mobilfunkteilnehmer-Identifikations-Moduls (SIM) ermöglicht, ausgelesen und in dem mit 202 gekennzeichneten Verfahrensschritt über einen Nachrichtendienst des Mobilfunknetzes, vorliegend mittels SMS, von dem mobilen Endgerät (Mobile) an den Aktualisierungsbeziehungsweise Provisionierungsdienst (OTA) übertragen.

Die Kennung wird dann von dem Aktualisierungs- beziehungsweise Provisionierungsdienst einer dazu eingerichteten Recheneinrichtung (Server), vorliegend einem OTA-Server, übermittelt, wie in Fig. 2 anhand des mit 203 gekennzeichneten Verfahrensschrittes dargestellt.

Die Recheneinrichtung (Server) fragt unter Nutzung der Kennung in dem mit 204 gekennzeichneten Verfahrensschritt in der Datenbank (DB) den Aktualisierungstand beziehungsweise ein Aktualisierungserfordernis des Mobilfunkteilnehmer-Identifikations-Modul (SIM) ab.

Im Rahmen der Abfrage wird wie in Fig. 2 durch den mit 205 gekennzeichneten Verfahrensschritt symbolisch dargestellt, überprüft, ob das Mobilfunkteilnehmer-Identifikations-Modul (SIM) aktualisiert werden muss, also ob ein Aktualisierungsbedürfnis des Mobilfunkteilnehmer-Identifikations-Modul (SIM) vorliegt oder nicht. In dem vorliegenden Fall ist ein Aktualisierungsbedürfnis für das Mobilfunkteilnehmer-Identifikations-Modul (SIM) erforderlich.

Die entsprechende Aktualisierung des Mobilfunkteilnehmer-ldentifikations-Modul (SIM) wird der Recheneinrichtung (Server) mit dem mit 206 gekennzeichneten Verfahrensschritt mitgeteilt und von diesem weiter initiiert. Seitens der Datenbank (DB) wird für die Kennung des Mobilfunkteilnehmer-Identifikations-Moduls (SIM) entsprechend vermerkt, dass eine Aktualisierung initiiert wurde.

In dem mit 207 gekennzeichneten Verfahrensschritt sendet die Recheneinrichtung (Server) dem Aktuatisierungs- beziehungsweise Provisionierungsdienst (OTA) die entsprechenden für die Aktualisierung erforderlichen beziehungsweise entsprechenden Informationen, vorliegend Aktualisierungsinformationen für das Mobilfunkteilnehmer-Identifikations-Modul (SIM). Diese werden in dem mit 208 gekennzeichneten Verfahrenschritt über einen Nachrichtendienst des Mobilfunknetzes an das mobile Endgerät (Mobile) übertragen und in dem mit 209 gekennzeichneten Verfahrensschritt seitens des Mobilfunkteilnehmer-Identifikations-Moduls (SIM) durch Speichern erfasst.

Da im Rahmen einer Aktualisierung mitunter Kenntnisse über das jeweils mit dem Mobilfunkteilnehmer-Identifikations-Modul (SIM) genutzte mobile Endgerät (Mobile) erforderlich sind, wird vorliegend im Rahmen der Übertragung der Kennung des Mobilfunkteilnehmer-Identifikations-Moduls (SIM) von dem mobilen Endgerät (Mobile) an den Aktualisierungs- beziehungsweise Provisionierungsdienst (OTA) (vergleiche Verfahrens- beziehungsweise Ablaufschritte 102 und/oder 202) vorteilhafterweise eine gerätespezifische Kennung des mobilen Endgerätes (Mobile) mit übertragen. Vorteilhafterweise wird dazu von dem Anwendungsprogramm (Applet) mit der Erfassung der Kennung die gerätespezifische Kennung des mobilen Endgerätes (Mobile), vorzugsweise die sogenannte IMEI, erfasst und mit übertragen, vorzugsweise durch Anhängen an die Nachricht. Erfindungsgemäß ist so vorteilhafterweise eine gezielte gerätespezifische Aktualisierung vomehmbar.

Die in den Figuren der Zeichnung dargestellten Ausführungsbeispiele dienen lediglich der Erläuterung der Erfindung und sind für diese nicht beschränkend.

### Bezugszeichenliste

- 101: Verfahrensschritt
- 102: Verfahrensschritt
- 103: Verfahrensschritt
- 104: Verfahrensschritt
- 105: Verfahrensschritt
- 106: Verfahrensschritt
- 201: Verfahrensschritt
- 202: Verfahrensschritt
- 203: Verfahrensschritt
- 204: Verfahrensschritt
- 205: Verfahrensschritt
- 206: Verfahrensschritt
- 207: Verfahrensschritt
- 208: Verfahrensschritt
- 209: Verfahrensschritt
- SIM: Mobilfunkteilnehmer-Identifikations-Modul
- Mobile: mobiles Endgerät/Mobilfunktelefon
- OTA: mobilfunknetzseitiger Dienst (Provisionierungsdienst) (OTA: Over The Air)
- Server: mobilfunknetzseitige Recheneinrichtung
- DB: mobilfunknetzseitige Datenbank

## Patentansprüche

1. Verfahren zur Aktualisierung der Konfiguration eines einem in einem Mobilfunknetz betreibbaren mobilen Endgerät (Mobile) einen einen Mobilfunkteilnehmer im Mobilfunknetz authentifizierenden Zugang zum Mobilfunknetz ermöglichenden Mobilfunkteilnehmer-Identifikations-Moduls (SIM) hinsichtlich der Nutzung von dem Mobilfunkteilnehmer und/oder dem von diesem genutzten mobilen Endgerät (Mobile) im Mobilfunknetz zur Verfügung stehenden Diensten und/oder Funktionalitäten des Mobilfunknetzes, wobei seitens des Mobilfunkteilnehmer-Identifikations-Moduls (SIM) wenigstens eine Kennung vorgesehen ist, welche zumindest mobilfunknetzseitig eine Erfassung eines Aktualisierungsbedürfnisses des Mobilfunkteilnehmer-Identifikations-Moduls (SIM) ermöglicht, und auf dem Mobilfunkteilnehmer-Identifikations-Modul (SIM) und/oder seitens des das Mobilfunkteilnehmer-Identifikations-Modul (SIM) nutzenden mobilen Endgerätes (Mobile) die folgenden Schritte ausgeführt werden:
- Erfassung der Kennung des Mobilfunkteilnehmer-Identifikations-Moduls (SIM),
- Senden einer die Kennung enthaltenden Nachricht an einen Netzknoten des Mobilfunknetzes,
- Empfangen einer seitens des Mobilfunknetzes auf die Nachricht erzeugten Antwortnachricht von einem Netzknoten des Mobilfunknetzes zumindest bei Aktualisierungsbedarf hinsichtlich der Nutzung von dem Mobilfunkteilnehmer und/oder dem von diesem genutzten mobilen Endgerät (Mobile) im Mobilfunknetz zur Verfügung stehenden Diensten und/oder Funktionalitäten des Mobilfunknetzes,
- Extrahieren wenigstens einer Aktualisierungsinformation aus der empfangenen Antwortnachricht bei Aktualisierungsbedarf hinsichtlich der Nutzung von dem Mobilfunkteilnhmer und/oder dem von diesem genutzten mobilen Endgerät (Mobile) im Mobilfunknetz zur Verfügung stehenden Diensten und/oder Funktionalitäten des Mobilfunknetzes, und
- Speicherung der Aktualisierungsinformation auf dem Mobilfunkteilnehmer-Identifikations-Modul (SIM),
**dadurch gekennzeichnet, dass**
die Kennung neben der Erkennung eines Aktualisierungsbedürfnisses eine zumindest mobilfunknetzseitig unterscheidbare Identifizierung von ansonsten identischen Mobilfunkteilnejhmer-Identifikations-Modulen (SIM) ermöglicht, durch die eine Individualisierung von Mobilfunkteilnehmer-Identifikations-Modulen (SIM) eines Sets von Mobilfunkteilnehmer-Identrfikations-Modulen (SIM), insbesondere sogenannten Twin-, Tri- oder Multi-SIM-Sets, erzielbar ist.

2. Verfahren nach Anspruch 1, **gekennzeichnet durch** ein Extrahieren einer zumindest mobilfunknetzseitig eine Erfassung eines Aktualisierungsbedürfnisses und/oder -standes des Mobilfunkteilnehmer-Identifikations-Moduls (SIM) ermöglichenden Kennung aus der empfangenen Antwortnachricht und ein Speichern der extrahierten Kennung seitens des Mobilfunkteilnehmer-Identifikations-Moduls (SIM)

3. Verfahren nach Anspruch 1 oder Anspruch 2, **dadurch gekennzeichnet, dass** die Erfassung der Kennung eines Mobilfunkteilnehmer-Identifikations-Moduls (SIM), durch Lesen einer die Kennung als Inhalt aufweisenden Speicherstelle des Mobilfunkteilnehmer-Identifikations-Moduls (SIM) erfolgt.

4. Verfahren nach einem der Ansprüche 1 bis 3, **dadurch gekennzeichnet, dass** das Senden der Kennung an den Netzknoten des Mobilfunknetzes durch eine seitens des mobilen Endgerätes (Mobile) und/oder eine seitens des Mobilfunkteilnehmer-Identifikatiops-Modul (SIM) ausführbare Anwendung des Mobilfunkteilnehmer-Identifikations-Moduls (SIM) initiiert wird.

5. Verfahren nach Anspruch 4, **dadurch gekennzeichnet, dass** das Senden der Kennung an den Netzknoten des Mobilfunknetzes automatisch beim Einschalten des mobilen Endgerätes (Mobile) oder beim Anmelden des mobilen Endgerätes (Mobile) beim beziehungsweise in dem Mobilfunknetz, oder manuell durch wenigstens eine Betätigungseingabe initiiert wird.

6. Verfahren nach einem der Ansprüche 1 bis 5, **gekennzeichnet durch** eine Ausführung der Verfahrensschritte mittels eines seitens des mobilen Endgerätes (Mobile) und/oder eines seitens des Mobilfunkteilnehmer-Identifikations-Moduls (SIM) ausführbaren Anwendungsprogramms.

7. Verfahren zur Aktualisierung der Konfiguration eines einem in einem Mobilfunknetz betreibbaren mobiler Endgerät (Mobile) einen einen Mobilfunkteilnehmer im Mobilfunknetz authentifizierenden Zugang zum Mobilfunknetz ermöglichenden Mobilfunkteilnehmer-Identifikations-Moduls (SIM) hinsichtlich der Nutzung von dem Mobilfunkteilnehmer und/oder dem von diesem genutzten mobilen Endgerät (Mobile) im Mobilfunknetz zur Verfügung stehenden Diensten und/oder Funktionalitäten des Mobilfunknetzes, wobei seitens des Mobilfunkteilnehmer-Identifikations-Moduls (SIM) wenigstens eine Kennung vorgesehen ist, welche zumindest mobilfunknetzseitig eine Erfassung eines Aktualisierungsbedürfnisses des Mobilfunkteilnehmer-Identifikations-Moduls (SIM) ermöglicht, und seitens eines Netzknotens des Mobilfunknetzes und/oder seitens des Mobilfunknetzes die folgenden Schritte ausgeführt werden:
- Empfangen einer die Kennung enthaltenden Nachricht von einem im Mobilfunknetz betreibbaren mobilen Endgerät (Mobile),
- Extrahieren der Kennung aus der empfangenen Nachricht,
- Ermittlung eines Aktualisierungsbedarfs hinsichtlich der Nutzung von dem Mobilfunkteilnehmer und/oder dem von diesem genutzten mobilen Endgerät (Mobile) im Mobilfunknetz zur Verfügung stehenden Diensten und/oder Funktionalitäten des Mobilfunknetzes anhand und/oder aus der extrahierten Kennung,
- Erzeugen einer wenigstens eine Aktualisierungsinformation aufweisenden Antwortnachricht in Abhängigkeit des ermittelten Aktualisierungsbedarfs hinsichtlich der Nutzung von dem Mobilfunkteilnehmer und/oder dem von diesem genutzten mobilen Endgerät (Mobile) im Mobilfunknetz zur Verfügung stehenden Diensten und/oder Funktionalitäten des Mobilfunknetzes, und
- Senden der Antwortnachricht über das mobile Endgerät (Mobile) an das Mobilfunkteilnehmer-Identifikations-Modul (SIM),
**dadurch gekennzeichnet, dass**
die Kennung neben der Erkennung eines Aktualisierungsbedürfnisses eine zumindest mobilfunknetzseitig unterscheidbare Identifizierung von ansonsten identischen Mobilfunkteilnehmer-Identifikations-Modulen (SIM) ermöglicht, durch die eine Individualisierung von Mobilfunkteilnehmer-Identifikations-Modulen (SIM) eines Sets von Mobilfunkteilnehmer-Identifikations-Mqdulen (SIM), insbesondere sogenannten Twin-, Tri- oder Multi-SIM-Sets, erzielbar ist.

8. Verfahren nach Anspruch 7, **dadurch gekennzeichnet, dass** die Antwortnachricht eine zumindest mobilfunknetzseitig eine Erfassung eines Aktualisierungsbedürfnisses und/oder standes des Mobilfunkteilnehmer-Identifikations-Moduls (SIM) ermöglichende Kennung enthält.

9. Verfahren nach Anspruch 7 oder Anspruch 8, **gekennzeichnet durch** eine Ausführung der Verfahrensschritte mittels eines auf einer Recheneinrichtung (OTA, Server) des Mobilfunknetzes ausführbaren Anwendungsprogramms.

10. Verfahren nach einem der Ansprüche 1 bis 9, **dadurch gekennzeichnet, dass** die Kennungen der dem Mobilfunkteilnehmer zugeordneten Mobilfunkteilnehmer-Identifikations-Module (SIM) in wenigstens einer mobilfunknetzseitigen Datenbank (DB) erfasst und verwaltet werden.

11. Verfahren nach einem der Ansprüche 1 bis 10, **dadurch gekennzeichnet, dass** die von dem mobilen Endgerät (Mobile) an das Mobilfunknetz übertragene Kennung mobilfunknetzseitig wenigstens einem Vergleich mit wenigstens einer der in der mobilfunknetzseitigen Datenbank (DB) erfassten und verwalteten Kennungen unterzogen wird.

12. Mobilfunknetz mit einer aus Funkzellen aufgebauten zellularen Netzstruktur und darin betreibbaren mobilen Endgeräten, insbesondere gemäß dem GSM- und/oder UMTS-Funknetzstandard,
**dadurch gekennzeichnet, dass**
die das Mobilfunknetz ausbildenden Einrichtungen und/oder die von diesen genutzten Einrichtungen zur Ausführung eines Verfahrens nach einem der Ansprüche 8 bis 11 ausgebildet sind.

13. Mobiles Endgerät (Mobile), insbesondere Mobilfunktelefon, zum Betrieb in einem Mobilfunknetz, insbesondere gemäß dem GSM- und/oder UMTS-Funknetzstandard, umfassend
- eine Einheit zur Erfassung einer eine zumindest mobilfunknetzseitig eine Erfassung eines Aktualisierungsbedürfnisses eines Mobilfunkteilnehmer-Identifikations-Moduls (SIM) hinsichtlich der Nutzung von dem Mobilfunkteilnehmer und/oder dem von diesem genutzten mobilen Endgerät (Mobile) im Mobilfunknetz zur Verfügung stehenden Diensten und/oder Funktionalitäten des Mobilfunknetzes ermöglichenden Kennung seitens eines Mobilfunkteilnehmer-Identifikations-Moduls (SIM),
- eine Einheit zur Bestimmung des Aktuatisierungsbedürfnisses anhand der erfassten Kennung des Mobilfunkteilnehmer-Identifikations-Moduls (SIM),
- eine Einheit zum Senden einer Nachricht an einen Netzknoten des Mobilfunknetzes,
- eine Einheit zum Empfangen einer seitens des Mobilfunknetzes auf die Nachricht erzeugten Antwortnachricht von einem Netzknoten des Mobilfunknetzes,
- eine Einheit zum Extrahieren wenigstens einer Aktualisierungsinformation und/oder einer Kennung aus der empfangenen Antwortnachricht, und
- eine Einheit zur Speicherung der extrahierten Aktualisierungsinformation und/oder Kennung auf dem Mobilfunkteilnehmer-Identifikations-Modul (SIM),
**dadurch gekennzeichnet, dass** die Kennung neben der Erkennung eines Aktualisierungsbedürfnisses eine zumindest mobilfunknetzseitig unterscheidbare Identifizierung von ansonsten identischen Mobilfunkteilnehmer-Identifikations-Modulen (SIM) ermöglicht, durch die eine Individualisierung von Mobilfunkteilnehmer-Identifikations-Modulen (SIM) eines Sets von Mobilfunkteilnehmer-Identifikations-Modulen (SIM), insbesondere sogenannten Twin-, Tri- oder Multi-SIM Sets, erzielbar ist.

14. Mobiles Endgerät (Mobile) nach Anspruch 13, **dadurch gekennzeichnet, dass** dieses eine Ein-/Ausgabeeinheit zur Kommunikation mit einem Mobilfunkteilnehmer-Identifikations-Modul (SIM) aufweist, welche dazu ausgebildet ist, eine Speichrstelle des Mobilfunkteilnehmer-Identifikations-Moduls (SIM) zur Ausführung eines Verfahrens nach einem der Ansprüche 1 bis 6 auszulesen und/oder zu beschreiben.

15. Mobilfunkteilnehmer-Identifikations-Modul (SIM) zur Nutzung in einem in einem Mobilfunknetz betreibbaren mobilen Endgerät, insbesondere gemäß dem GSM- und/oder UMTS-Funknetzstandard, umfassend
- Mittel zum Speichern einer Kennung seitens einer Speicherstelle des Mobilfunkteilnehmer-Identifikations-Moduls (SIM), wobei die Kennung zumindest mobilfunknetzseitig eine Erfassung eines Aktualisierungsbedürfnisses eines Mobilfunkteilnehmer-Identifikations-Moduls (SIM) hinsichtlich der Nutzung von dem Mobilfunkteilnehmer und/oder dem von diesem genutzten mobilen Endgerät (Mobile) Im Mobilfunknetz zur Verfügung stehenden Diensten und/oder Funktionalitäten des Mobilfunknetzes ermöglicht,
- Mittel zum Lesen der Kennung aus der Speicherstelle des Mobilfunkteilnehmer-Identifikations-Moduls (SIM),
- Mittel zum Initiieren der Sendung einer die Kennung umfassenden Nachricht,
- Mittel zum Empfang einer Antwortnachricht auf die Nachricht,
- Mittel zum Extrahieren wenigstens einer Aktualisierungsinformation und/oder einer Kennung aus der empfangenen Antwortnachricht, und
- Mittel zum Speichern der Aktualisierungsinformation und/oder der aus der Antwortnachricht extrahierten Kennung auf dem Mobilfunkteilnehmer-Identifikations-Modul (SIM),
**dadurch gekennzeichnet, dass**
die Kennung neben der Erkennung eines Aktualisierungsbedürfnisses eine zumindest mobilfunknetzseitig unterscheidbare Identifizierung von ansonsten identischen Mobilfunkteilnehmer-Identifikations-Modulen (SIM) ermöglicht, durch die eine Individualisierung von Mobilfunkteilnehmer-Identifikations-Modulen (SIM) eines Sets von Mobilfunkteilnehmer-Identifikations-Modulen (SIM), insbesondere sogenannten Twin-, Tri- oder Multi-SIM-Sets, erzielbar ist.

16. Mobilfunkteilnehmer-Identifikations-Modul (SIM) nach Anspruch 15, **dadurch gekennzeichnet, dass** dieses zur Ausführung eines Verfahrens nach einem der Ansprüche 1 bis 6 ausgebildet ist.

## Claims

1. A method for updating the configuration of a mobile subscriber identification module (SIM) that enables a mobile terminal (mobile) operable in a mobile radio network to have an access to the mobile radio network, which access authenticates a mobile subscriber in the mobile radio network, with respect to the use of services that are available in the mobile radio network and/or functionalities of the mobile radio network by the mobile subscriber and/or the mobile terminal (mobile) used by this one, wherein at least one identifier is provided by the mobile subscriber identification module (SIM), which identifier enables to register a need for updating of the mobile subscriber identification module (SIM) by at least the mobile radio network, and wherein the following steps will be realized on the mobile subscriber identification module (SIM) and/or by the mobile terminal (mobile) using the mobile subscriber identification module (SIM):
- gathering the identifier of the mobile subscriber identification module (SIM),
- sending a message containing the identifier to a network node of the mobile radio network,
- receiving a response message, that has been generated with respect to the message by the mobile radio network, from a network node of the mobile radio network at least if there is a need for updating with respect to the use of services that are available in the mobile radio network and/or functionalities of the mobile radio network by the mobile subscriber and/or the mobile terminal (mobile) used by this one,
- extracting at least one updating information item from the received response message if there is a need for updating with respect to the use of services that are available in the mobile radio network and/or functionalities of the mobile radio network by the mobile subscriber and/or the mobile terminal (mobile) used by this one, and
- storing the updating information item on the mobile subscriber identification module (SIM),
**characterized in that**
the identifier enables, apart from recognizing a need for updating, an identification of otherwise identical mobile subscriber identification modules (SIM), which identification can be distinguished at least by the mobile radio network, and by means of which identification an individualisation of mobile subscriber identification modules (SIM) of a set of mobile subscriber identification modules (SIM), in particular so called twin, tri or multi SIM sets can be obtained.

2. A method according to claim 1, **characterized by** extracting an identifier from the received response message, which identifier enables to register a need and/or condition for updating of the mobile subscriber identification module (SIM) at least by the mobile radio network, and by storing the extracted identifier by the mobile subscriber identification module (SIM).

3. A method according to claim 1 or claim 2, **characterized in that** the identifier of a mobile subscriber identification module (SIM) will be gathered by reading a storage location of the mobile subscriber identification module (SIM), which storage location comprises the identifier as content.

4. A method according to any one of the claims 1 to 3, **characterized in that** the step of sending the identifier to the network node of the mobile radio network will be initiated by means of an application of the mobile subscriber identification module (SIM) that can be executed by the mobile terminal (mobile) and/or by the mobile subscriber identification module (SIM).

5. A method according to claim 4, **characterized in that** the step of sending the identifier to the network node of the mobile radio network will be initiated automatically upon switching on the mobile terminal (mobile) or upon logging in the mobile terminal (mobile) in the mobile radio network or manually by means of at least one confirmation input.

6. A method according to any one of the claims 1 to 5, **characterized by** an execution of the process steps by means of an application program that can be executed by the mobile terminal (mobile) and/or by the mobile subscriber identification module (SIM).

7. A method for updating the configuration of a mobile subscriber identification module (SIM) that enables a mobile terminal (mobile) operable in a mobile radio network to have an access to the mobile radio network, which access authenticates a mobile subscriber in the mobile radio network, with respect to the use of services that are available in the mobile radio network and/or functionalities of the mobile radio network by the mobile subscriber and/or the mobile terminal (mobile) used by this one, wherein at least one identifier is provided by the mobile subscriber identification module (SIM), which identifier enables to register a need for updating of the mobile subscriber identification module (SIM) by at least the mobile radio network, and wherein the following steps will be realized by a network node of the mobile radio network and/or by the mobile radio network:
- receiving a message containing the identifier from a mobile terminal (mobile) operable in the mobile radio network,
- extracting the identifier from the received message,
- determining a need for updating with respect to the use of services that are available in the mobile radio network and/or functionalities of the mobile radio network by the mobile subscriber and/or the mobile terminal (mobile) used by this one by means of and/or based upon the extracted identifier,
- generating a response message comprising at least one updating information item in dependence on the determined need for updating with respect to the use of services that are available in the mobile radio network and/or functionalities of the mobile radio network by the mobile subscriber and/or the mobile terminal (mobile) used by this one, and
- sending the response message via the mobile terminal (mobile) to the mobile subscriber identification module (SIM),
**characterized in that**
the identifier enables, apart from recognizing a need for updating, an identification of otherwise identical mobile subscriber identification modules (SIM), which identification can be distinguished at least by the mobile radio network, and by means of which identification an individualisation of mobile subscriber identification modules (SIM) of a set of mobile subscriber identification modules (SIM), in particular so called twin, tri or multi SIM sets can be obtained.

8. A method according to claim 7, **characterized in that** the response message contains an identifier which enables to register a need and/or condition for updating of the mobile subscriber identification module (SIM) by at least the mobile radio network.

9. A method according to claim 7 or claim 8, **characterized by** an execution of the process steps by means of an application program that can be executed on a computer system (OTA, server) of the mobile radio network.

10. A method according to any one of the claims 1 to 9, **characterized in that** the identifiers of the mobile subscriber identification modules (SIM) allocated to the mobile subscriber are gathered and administered in at least one data base (DB) of the mobile radio network.

11. A method according to any one of the claims 1 to 10, **characterized in that** the identifier transmitted from the mobile terminal (mobile) to the mobile radio network will be subjected by the mobile radio network to at least one comparison with at least one of the identifiers gathered and administered in the data base (DB) of the mobile radio network.

12. A mobile radio network comprising a cellular network structure composed of radio cells and mobile terminals that can be operated therein, especially according to the GSM and/or UMTS radio network standard,
**characterized in that**
the devices which form the mobile radio network and/or the devices which are used by these ones are configured to carry out a method according to any one of the claims 7 to 11.

13. A mobile terminal (mobile), in particular a mobile phone, for being operated in a mobile radio network, especially according to the GSM and/or UMTS radio network standard, comprising:
- a unit for gathering an identifier of a mobile subscriber identification module (SIM), which identifier enables to register a need for updating of a mobile subscriber identification module (SIM) by at least the mobile radio network with respect to the use of services that are available in the mobile radio network and/or functionalities of the mobile radio network by the mobile subscriber and/or the mobile terminal (mobile) used by this one,
- a unit for determining the need for updating on the base of the gathered identifier of the mobile subscriber identification module (SIM),
- a unit for sending a message to a network node of the mobile radio network,
- a unit for receiving a response message, that has been generated with respect to the message by the mobile radio network, from a network node of the mobile radio network,
- a unit for extracting at least one updating information item and/or one identifier from the received response message, and
- a unit for storing the extracted updating information item and/or the identifier on the mobile subscriber identification module (SIM),
**characterized in that**
the identifier enables, apart from recognizing a need for updating, an identification of otherwise identical mobile subscriber identification modules (SIM), which identification can be distinguished at least by the mobile radio network, and by means of which identification an individualisation of mobile subscriber identification modules (SIM) of a set of mobile subscriber identification modules (SIM), in particular so called twin, tri or multi SIM sets can be obtained.

14. A mobile terminal (mobile) according to claim 13, **characterized in that** this one comprises an input/output unit for the communication with a mobile subscriber identification module (SIM) which unit is configured to read and/or to describe a storage location of the mobile subscriber identification module (SIM) for carrying out a method according to any one of the claims 1 to 6.

15. A mobile subscriber identification module (SIM) for the use in a mobile terminal that is operable in a mobile radio network, in particular according to the GSM and/or UMTS radio network standard, comprising
- means for storing an identifier by means of a storage location of the mobile subscriber identification module (SIM), wherein the identifier enables to register a need for updating of a mobile subscriber identification module (SIM) by at least the mobile radio network with respect to the use of services that are available in the mobile radio network and/or functionalities of the mobile radio network by the mobile subscriber and/or the mobile terminal (mobile) used by this one,
- means for reading out the identifier from the storage location of the mobile subscriber identification module (SIM),
- means for initiating the step of sending a message comprising the identifier,
- means for receiving a response message to the message,
- means for extracting at least one updating information item and/or an identifier from the received response message, and
- means for storing the updating information item and/or the identifier extracted from the response message on the mobile subscriber identification module (SIM),
**characterized in that**
the identifier enables, apart from recognizing a need for updating, an identification of otherwise identical mobile subscriber identification modules (SIM), which identification can be distinguished at least by the mobile radio network, and by means of which identification an individualisation of mobile subscriber identification modules (SIM) of a set of mobile subscriber identification modules (SIM), in particular so called twin, tri or multi SIM sets can be obtained.

16. A mobile subscriber identification module (SIM) according to claim 15, **characterized in that** this one is configured for carrying out a method according to any one of the claims 1 to 6.

## Revendications

1. Procédé d'actualisation de la configuration d'un module d'identification d'abonné mobile (SIM), qui permet à un terminal mobile (portable) fonctionnant dans un réseau radio mobile d'avoir un accès au réseau radio mobile, lequel accès authentifie un abonné mobile dans le réseau radio mobile, par rapport à l'utilisation de services disponibles dans le réseau radio mobile et/ou de fonctionnalités du réseau radio mobile par l'abonné mobile et/ou par le terminal mobile (portable) utilisé par celui-ci, dans lequel au moins un identifiant est prévu par le module d'identification d'abonné mobile (SIM), lequel identifiant permet de saisir une nécessité d'actualisation du module d'identification d'abonné mobile (SIM) par au moins le réseau radio mobile, et dans lequel les étapes suivantes sont effectuées sur le module d'identification d'abonné mobile (SIM) et/ou par le terminal mobile (portable) qui utilise le module d'identification d'abonné mobile (SIM):
- saisir l'identifiant du module d'identification d'abonné mobile (SIM),
- envoyer un message contenant l'identifiant à un noeud de réseau du réseau radio mobile,
- recevoir un message de réponse généré par rapport au message par le réseau radio mobile d'un noeud de réseau du réseau radio mobile, au moins s'il y a une nécessité d'actualisation par rapport à l'utilisation de services disponibles dans le réseau radio mobile et/ou de fonctionnalités du réseau radio mobile par l'abonné mobile et/ou par le terminal mobile (portable) utilisé par celui-ci,
- extraire au moins une information d'actualisation à partir du message de réponse reçu, s'il y a une nécessité d'actualisation par rapport à l'utilisation de services disponibles dans le réseau radio mobile et/ou de fonctionnalités du réseau radio mobile par l'abonné mobile et/ou par le terminal mobile (portable) utilisé par celui-ci, et
- mémoriser l'information d'actualisation sur le module d'identification d'abonné mobile (SIM),
**caractérisé en ce que**
l'identifiant permet, outre la détection d'une nécessité d'actualisation, une identification de modules d'identification d'abonné mobile (SIM) autrement identiques, laquelle identification peut au moins être distinguée par le réseau radio mobile et à l'aide de laquelle identification on peut obtenir une individualisation de modules d'identification d'abonné mobile (SIM) d'un ensemble de modules d'identification d'abonné mobile (SIM), notamment des ensembles dits twin, tri ou multi SIM.

2. Procédé selon la revendication 1, **caractérisé par** une extraction d'un identifiant à partir du message de réponse reçu, lequel identifiant permet de saisir une nécessité et/ou un état d'actualisation du module d'identification d'abonné mobile (SIM) par au moins le réseau radio mobile, et par une mémorisation de l'identifiant extrait par le module d'identification d'abonné mobile (SIM).

3. Procédé selon la revendication 1 ou la revendication 2, **caractérisé en ce que** l'identifiant d'un module d'identification d'abonné mobile (SIM) sera saisi en lisant un emplacement de stockage du module d'identification d'abonné mobile (SIM), lequel emplacement de stockage comprend l'identifiant comme contenu.

4. Procédé selon l'une des revendications 1 à 3, **caractérisé en ce que** l'envoi de l'identifiant au noeud de réseau du réseau radio mobile sera initié par moyen d'une application du module d'identification d'abonné mobile (SIM), laquelle application peut être exécutée par le terminal mobile (portable) et/ou par le module d'identification d'abonné mobile (SIM).

5. Procédé selon la revendication 4, **caractérisé en ce que** l'envoi de l'identifiant au noeud de réseau du réseau radio mobile sera initié automatiquement en allumant le terminal mobile (portable) ou en enregistrant le terminal mobile (portable) dans le réseau radio mobile ou manuellement par moyen d'au moins une entrée de confirmation.

6. Procédé selon l'une des revendications 1 à 5, **caractérisé par** une exécution des étapes de procédé par moyen d'un programme d'application susceptible d'être exécuté par le terminal mobile (portable) et/ou par le module d'identification d'abonné mobile (SIM).

7. Procédé d'actualisation de la configuration d'un module d'identification d'abonné mobile (SIM), qui permet à un terminal mobile (portable) fonctionnant dans un réseau radio mobile d'avoir un accès au réseau radio mobile, lequel accès authentifie un abonné mobile dans le réseau radio mobile, par rapport à l'utilisation de services disponibles dans le réseau radio mobile et/ou de fonctionnalités du réseau radio mobile par l'abonné mobile et/ou par le terminal mobile (portable) utilisé par celui-ci, dans lequel au moins un identifiant est prévu par le module d'identification d'abonné mobile (SIM), lequel identifiant permet de saisir une nécessité d'actualisation du module d'identification d'abonné mobile (SIM) par au moins le réseau radio mobile, et dans lequel les étapes suivantes sont effectuées par un noeud de réseau du réseau radio mobile et/ou par le réseau radio mobile:
- recevoir un message contenant l'identifiant à partir d'un terminal mobile (portable) fonctionnant dans le réseau radio mobile,
- extraire l'identifiant à partir du message reçu,
- déterminer une nécessité d'actualisation par rapport à l'utilisation de services disponibles dans le réseau radio mobile et/ou de fonctionnalités du réseau radio mobile par l'abonné mobile et/ou par le terminal mobile (portable) utilisé par celui-ci par moyen et/ou sur la base de l'identifiant extrait,
- générer un message de réponse comprenant au moins une information d'actualisation en fonction de la nécessité d'actualisation déterminée par rapport à l'utilisation de services disponibles dans le réseau radio mobile et/ou de fonctionnalités du réseau radio mobile par l'abonné mobile et/ou par le terminal mobile (portable) utilisé par celui-ci, et
- envoyer le message de réponse via le terminal mobile (portable) au module d'identification d'abonné mobile (SIM),
**caractérisé en ce que**
l'identifiant permet, outre la détection d'une nécessité d'actualisation, une identification de modules d'identification d'abonné mobile (SIM) autrement identiques, laquelle identification peut au moins être distinguée par le réseau radio mobile et à l'aide de laquelle identification on peut obtenir une individualisation de modules d'identification d'abonné mobile (SIM) d'un ensemble de modules d'identification d'abonné mobile (SIM), notamment des ensembles dits twin, tri ou multi SIM.

8. Procédé selon la revendication 7, **caractérisé en ce que** le massage de réponse contient un identifiant, qui permet de saisir une nécessité et/ou un état d'actualisation du module d'identification d'abonné mobile (SIM) par au moins le réseau radio mobile.

9. Procédé selon la revendication 7 ou la revendication 8, **caractérisé par** une exécution des étapes de procédé par moyen d'un programme d'application susceptible d'être exécuté sur un dispositif informatique (OTA, serveur) du réseau radio mobile.

10. Procédé selon l'une des revendications 1 à 9, **caractérisé en ce que** les identifiants des modules d'identification d'abonné mobile (SIM) attribués à l'abonné mobile sont saisis et gérés dans au moins une base de données (DB) du réseau radio mobile.

11. Procédé selon l'une des revendications 1 à 10, **caractérisé en ce que** l'identifiant transmis à partir du terminal mobile (portable) au réseau radio mobile sera soumis par le réseau radio mobile à au moins une comparaison avec au moins un des identifiants saisis et gérés dans la base de données (DB) du réseau radio mobile.

12. Réseau radio mobile comprenant une structure de réseau cellulaire composée de cellules radio et des terminaux mobiles fonctionnant dans celui-ci, notamment selon le standard de réseau radio GSM et/ou UMTS,
**caractérisé en ce que**
les dispositifs, qui forment le réseau radio mobile, et/ou les dispositifs utilisés par ceux-ci sont configurés pour exécuter un procédé selon l'une des revendications 7 à 11.

13. Terminal mobile (portable), notamment téléphone mobile, destiné au fonctionnement dans un réseau radio mobile, notamment selon le standard de réseau radio GSM et/ou UMTS, comprenant:
- une unité destinée à saisir un identifiant d'un module d'identification d'abonné mobile (SIM), lequel identifiant permet de saisir une nécessité d'actualisation d'un module d'identification d'abonné mobile (SIM) par rapport à l'utilisation de services disponibles dans le réseau radio mobile et/ou de fonctionnalités du réseau radio mobile par l'abonné mobile et/ou par le terminal mobile (portable) utilisé par celui-ci,
- une unité destinée à déterminer la nécessité d'actualisation sur la base de l'identifiant saisi du module d'identification d'abonné mobile (SIM),
- une unité destinée à envoyer un message à un noeud de réseau du réseau radio mobile,
- une unité destinée à recevoir un message de réponse généré par rapport au message par le réseau radio mobile d'un noeud de réseau du réseau radio mobile,
- une unité destinée à extraire au moins une information d'actualisation et/ou un identifiant à partir du message de réponse reçu, et
- une unité destinée à mémoriser l'information d'actualisation extraite et/ou l'identifiant extrait sur le module d'identification d'abonné mobile (SIM),
**caractérisé en ce que**
l'identifiant permet, outre la détection d'une nécessité d'actualisation, une identification de modules d'identification d'abonné mobile (SIM) autrement identiques, laquelle identification peut au moins être distinguée par le réseau radio mobile et à l'aide de laquelle identification on peut obtenir une individualisation de modules d'identification d'abonné mobile (SIM) d'un ensemble de modules d'identification d'abonné mobile (SIM), notamment des ensembles dits twin, tri ou multi SIM.

14. Terminal mobile (portable) selon la revendication 13, **caractérisé en ce que** celui-ci comprend une unité d'entrée/de sortie destinée à la communication avec un module d'identification d'abonné mobile (SIM), laquelle unité est configurée pour lire et/ou pour décrire un emplacement de stockage du module d'identification d'abonné mobile (SIM) pour exécuter un procédé selon l'une des revendications 1 à 6.

15. Module d'identification d'abonné mobile (SIM) pour l'utilisation dans un terminal mobile fonctionnant dans un réseau radio mobile, notamment selon le standard de réseau radio GSM et/ou UMTS, comprenant:
- des moyens pour mémoriser un identifiant par moyen d'un emplacement de stockage du module d'identification d'abonné mobile (SIM), l'identifiant permettant de saisir, par au moins le réseau radio mobile, une nécessité d'actualisation d'un module d'identification d'abonné mobile (SIM) par rapport à l'utilisation de services disponibles dans le réseau radio mobile et/ou de fonctionnalités du réseau radio mobile par l'abonné mobile et/ou par le terminal mobile (portable) utilisé par celui-ci,
- des moyens pour lire l'identifiant dans l'emplacement de stockage du module d'identification d'abonné mobile (SIM),
- des moyens pour initier l'envoi d'un message comprenant l'identifiant,
- des moyens pour recevoir un message de réponse par rapport au message,
- des moyens pour extraire au moins une information d'actualisation et/ou un identifiant à partir du message de réponse reçu, et
- des moyens pour mémoriser l'information d'actualisation et/ou l'identifiant extrait à partir du message de réponse sur le module d'identification d'abonné mobile (SIM),
**caractérisé en ce que**
l'identifiant permet, outre la détection d'une nécessité d'actualisation, une identification de modules d'identification d'abonné mobile (SIM) autrement identiques, laquelle identification peut au moins être distinguée par le réseau radio mobile et à l'aide de laquelle identification on peut obtenir une individualisation de modules d'identification d'abonné mobile (SIM) d'un ensemble de modules d'identification d'abonné mobile (SIM), notamment des ensembles dits twin, tri ou multi SIM.

16. Module d'identification d'abonné mobile (SIM) selon la revendication 15, **caractérisé en ce que** celui-ci est configuré pour effectuer un procédé selon l'une des revendications 1 à 6.
